# EUROPÄISCHE PATENTANMELDUNG

(11) **EP 3 121 564 A1**
(43) Veröffentlichungstag der Anmeldung: **25.01.2017**
(21) Anmeldenummer: 16180503.1
(22) Anmeldetag: 21.07.2016
(51) Int. Cl.: G01C 21/36, G01C 21/34

(54) **VERFAHREN ZUM BESTIMMEN EINER VORAUSSICHTLICHEN ROUTE MITTELS EINES NAVIGATIONSSYSTEMS**

(30) Priorität: 21.07.2015 DE 102015213748
(71) Anmelder: Preh Car Connect GmbH, 01156 Dresden (DE)
(72) Erfinder: Kaffka, Konrad, 01159 Dresden (DE)

(57) **Zusammenfassung**

Gemäß einem Verfahren zur Bestimmung einer voraussichtlichen Route mittels eines Navigationssystems (100) wird in einer Speichereinheit (142) eine Mehrzahl von Zielen gespeichert, wobei eines der Ziele von einem Benutzer in das Navigationssystem (100) eingegeben wird. Das Navigationssystem (100) wird in einem Gebiet bewegt, so dass das Navigationssystem (100) eine Mehrzahl von Positionen erreicht, wobei jede der Positionen mittels einer Positionsbestimmungseinheit (170) bestimmt und in der Speichereinheit (142) gespeichert wird. Durch eine Recheneinheit (152) wird aus der Mehrzahl von Zielen das Ziel automatisch ausgewählt, wobei das Ziel an keiner Position angeordnet ist, die mittels der Positionsbestimmungseinheit (170) bestimmt wurde und die in der Speichereinheit (142) gespeichert ist. Mittels der Recheneinheit (152) wird die voraussichtliche Route bestimmt, welche zu dem Ziel führt.

## Beschreibung

Die Erfindung betrifft ein Verfahren zum Bestimmen einer voraussichtlichen Route mittels eines Navigationssystems und ein Navigationssystem zum Ausführen des Verfahrens.

Herkömmliche selbstlernende Navigationsgeräte versuchen, ein voraussichtliches Ziel und eine voraussichtliche Route zu dem voraussichtlichen Ziel für solche Touren zu schätzen, für die ein Benutzer kein Ziel vorgibt, beispielsweise weil er die Route kennt, etwa bei alltäglichen Touren zwischen Wohnort und Arbeitsplatz. Zum Zweck der automatisierten Routenschätzung legen die Navigationsgeräte benutzer- oder fahrzeugspezifische Bewegungsprofile an, die bereits gefahrene Routen beziehungsweise erreichte Ziele mit Zeitinformationen beziehungsweise Standortinformationen verknüpfen. Am Beginn einer Tour, zu der ein Benutzer kein Ziel in ein selbstlernendes Navigationsgerät eingibt, schätzt das Navigationsgerät auf Basis eines angelernten Bewegungsprofils, einer aktuellen Uhrzeit beziehungsweise eines aktuellen Wochentages und optional weiterer Parameter, wie einer aktuellen Position oder einem bereits zurückgelegten Streckenabschnitt, ein voraussichtliches Ziel und eine voraussichtliche Route zu dem voraussichtlichen Ziel. Für die voraussichtliche Route kann das Navigationsgerät relevante Streckeninformationen, zum Beispiel eine Verkehrsstörungsmeldung, ausgeben.

Bekannte prädiktive Navigationsgeräte, die ein voraussichtliches Ziel schätzen, wenn ein Benutzer kein Ziel eingibt, sammeln und speichern Tourdaten zu absolvierten Touren, zum Beispiel zu absolvierten Fahrten eines Fahrzeugs beziehungsweise eines Benutzers des Fahrzeugs, und legen auf diese Weise ein Bewegungsprofil an. An dem Bewegungsprofil lassen sich regelmäßig zurückgelegte Routen sowie Bewegungsmuster erkennen, zum Beispiel, in welcher Reihenfolge und in welchem zeitlichen Abstand bestimmte Ziele angesteuert wurden. Wird bei einer Tour kein Ziel eingegeben, so legen die Navigationsgeräte die erkannten Bewegungsmuster einer Schätzung einer voraussichtlichen Route zugrunde. Optional wird die voraussichtliche Route auf relevante Verkehrsinformationen gescannt. Die Wahrscheinlichkeit dafür, dass ein geschätztes Ziel mit einem tatsächlichen Ziel übereinstimmt, steigt mit der gesammelten Datenmenge und der Anzahl der Touren.

Es stellt sich die Aufgabe, die Schätzung für eine voraussichtliche Route einer Tour, für die kein Ziel in ein Navigationssystem eingegeben wird, zu verbessern.

Die Aufgabe wird mit dem Verfahren nach Patentanspruch 1 und mit dem Navigationssystem nach Patentanspruch 10 gelöst. Weiterbildungen der Erfindung ergeben sich aus den abhängigen Patentansprüchen.

Demnach wird das Verfahren zum Bestimmen einer voraussichtlichen Route mittels eines Navigationssystems, welches eine Speichereinheit, eine Positionsbestimmungseinheit, eine Eingabeeinheit und eine Recheneinheit aufweist, ausgeführt und weist folgende Schritte auf: In der Speichereinheit wird eine Mehrzahl von Zielen gespeichert, wobei eines der Ziele von einem Benutzer mittels der Eingabeeinheit in das Navigationssystem eingegeben wird. Die Positionsbestimmungseinheit wird in einem Gebiet bewegt, so dass die Positionsbestimmungseinheit eine Mehrzahl von Positionen erreicht, wobei jede der Positionen mittels der Positionsbestimmungseinheit bestimmt und in der Speichereinheit gespeichert wird. Mittels der Recheneinheit wird aus der Mehrzahl von Zielen das Ziel automatisch ausgewählt, wobei das Ziel an keiner Position angeordnet ist, die mittels der Positionsbestimmungseinheit bestimmt wurde und in der Speichereinheit gespeichert ist. Mittels der Recheneinheit wird die voraussichtliche Route bestimmt, welche zu dem Ziel führt.

Gegenüber einer Routenschätzung mit einem herkömmlichen selbstlernenden Navigationsgerät erhöht das Berücksichtigen eines Ziels, das an keiner Position angeordnet ist, die mittels der Positionsbestimmungseinheit bestimmt wurde und in der Speichereinheit gespeichert ist, bei der Auswahl des Ziels der voraussichtlichen Route die Wahrscheinlichkeit für das Übereinstimmen des ausgewählten Ziels mit dem tatsächlichen Ziel für eine Fahrt, für die kein Ziel eingegeben wurde. Zudem benötigt das erfindungsgemäße Verfahren keine Lernphase, sondern sagt das tatsächliche Ziel bereits unmittelbar nach Eingabe einer geringen Zahl von Zielen mit hoher Wahrscheinlichkeit voraus.

Die nachfolgenden Figuren beziehen sich auf Ausführungsformen der Erfindung und verdeutlichen, teilweise anhand von Beispielen, Effekte der Ausführungsformen.
FIG. 1 ist ein schematisches Blockdiagramm eines Navigationssystems gemäß einer Ausführungsform der Erfindung.
FIG. 2 ist ein schematisches Blockdiagramm eines Navigationsgeräts mit einer integrierten Positionsbestimmungseinheit gemäß einer weiteren Ausführungsform der Erfindung.
FIG. 3 zeigt ein vereinfachtes schematisches Flussdiagramm eines Verfahrens zur Routenschätzung gemäß einer Ausführungsform der Erfindung.
FIG. 4 ist ein vereinfachtes schematisches Flussdiagramm eines Verfahrens zur Routenschätzung gemäß einer Weiterbildung der Erfindung mit beständigem Abgleich von Positionsdaten während der Fahrt.
FIG. 5A ist eine vereinfachte Darstellung eines Eingabeformulars für bevorzugte Ziele gemäß einer Ausführungsform der Erfindung mit menügestützter Eingabe.
FIG. 5B ist eine vereinfachte Darstellung eines Auswahlformulars zur Eingabe bevorzugter Ziele gemäß einer Ausführungsform der Erfindung betreffend ein Bestätigen eines an einem Navigationsgerät eingegebenen Ziels als bevorzugtes Ziel.
FIG. 5C ist eine vereinfachte Darstellung eines Auswahlformulars zur Eingabe bevorzugter Ziele gemäß einer Ausführungsform der Erfindung betreffend ein Bestätigen einer aktuellen Position als bevorzugtes Ziel.
FIG. 6 ist eine vereinfachte Darstellung eines Auswahlformulars zur Eingabe von Funktionen bevorzugter Ziele gemäß einer Weiterbildung der Erfindung.
FIG. 7 ist ein vereinfachtes schematisches Flussdiagramm eines Verfahrens zur Verwaltung von Benutzerprofilen, die bevorzugte Ziele und Zusatzdaten aufweisen, gemäß einer Weiterbildung der Erfindung.
FIG. 8 ist ein vereinfachtes schematisches Flussdiagramm eines Verfahrens zur Ausgabe von Streckeninformationen gemäß einer weiteren Ausführungsform der Erfindung.

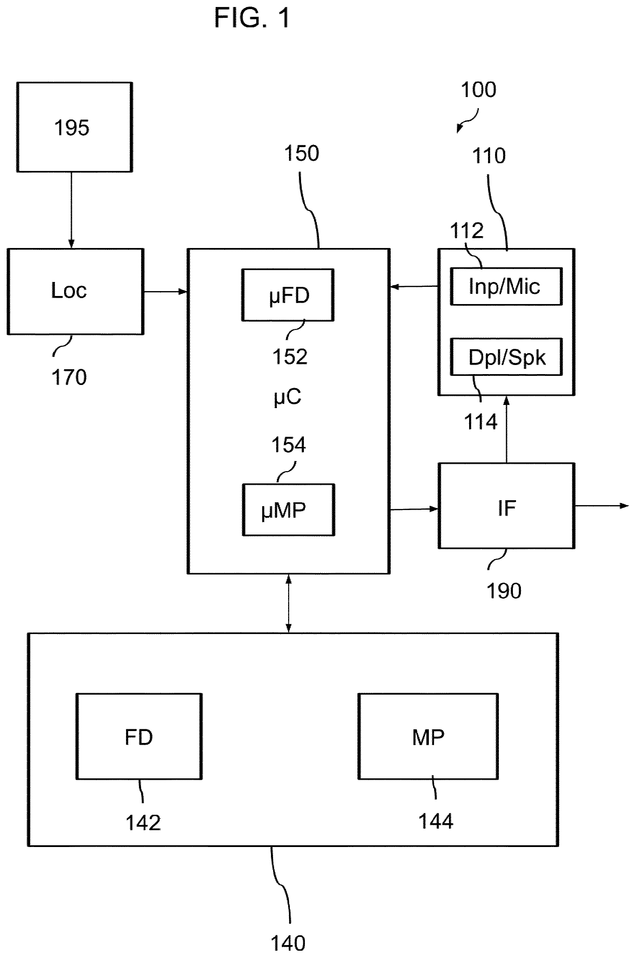

**FIG. 1** zeigt eine Ausführungsform eines Navigationssystems 100 zum Bestimmen einer voraussichtlichen Route gemäß einer Ausführungsform der Erfindung.

Das Navigationssystem 100 weist eine Positionsbestimmungseinheit 170 auf, die zum Bestimmen einer Mehrzahl von Positionen eingerichtet ist, die beim Bewegen der Positionsbestimmungseinheit 170 in einem Gebiet von der Positionsbestimmungseinheit 170 erreicht werden. Die Positionsbestimmungseinheit 170 ist signaltechnisch mit einer Empfangseinheit 195 verbunden. Die Positionsbestimmungseinheit 170 bestimmt die Position der Empfangseinheit 195 und damit auch die eigene Position unter Verwendung von Positionssignalen, die beispielsweise von Satelliten eines satellitengestützten Navigationssystems wie GALILEO, GPS, GLONASS oder COMPASS gesendet und unter Verwendung der Empfangseinheit 195 empfangen werden.

Eine Eingabeeinheit 112 des Navigationssystems 100 ist zum Eingeben eines Ziels in das Navigationssystem 100 durch einen Benutzer eingerichtet. Die Eingabeeinheit 112 weist ferner ein Bedienelement zum Kennzeichnen eines Ziels als ein bevorzugtes Ziel auf. Unter einem "bevorzugten Ziel" wird ein Ziel verstanden, zu dem zunächst keine Routenberechnung durchgeführt wird. Eine Route zu einem bevorzugten Ziel wird erst dann berechnet, wenn das Ziel aus einer Mehrzahl gespeicherter Ziele automatisch ausgewählt wurde.

Die Eingabeeinheit 112 kann zudem zur Eingabe von Zusatzdaten zu einem Ziel durch einen Benutzer eingerichtet sein. Bei der Eingabeeinheit 112 kann es sich beispielsweise um eine Tastatur, um einen Sensorteil eines berührungsempfindlichen Bildschirms (engl. Touchscreen) oder um ein Mikrofon handeln. Die Eingabeeinheit 112 kann integraler Bestandteil eines Navigationsgeräts, eines Computers oder eines mobilen Datenendgeräts, zum Beispiel eines Mobiltelefons, eines Tablets oder eines PDAs (Personal Digital Assistant) sein. Die Eingabeeinheit 112 ist beispielsweise mit einer Ausgabeeinheit 114 kombiniert, die auf optischem oder akustischem Weg ein Eingabeformular ausgibt. Beispielsweise ist die Ausgabeeinheit 114 ein Anzeigeteil eines berührungsempfindlichen Bildschirms, ein Bildschirm ohne Berührungssensor, eine alphanumerische LCD (liquid crystal display) - Anzeige oder ein Lautsprecher eines akustischen Dialogsystems. Das Navigationssystem 100 weist einen berührungsempfindlichen Bildschirm 110 auf, in dem die Eingabeeinheit 112 und die Ausgabeeinheit 114 integriert sind.

Das Navigationssystem 100 weist zudem eine Speichereinheit 142 auf, die zum Speichern der Mehrzahl von Positionen, die beim Bewegen der Positionsbestimmungseinheit 170 erreicht werden, sowie zum Speichern einer Mehrzahl von Zielen eingerichtet ist. Gegebenenfalls speichert die Speichereinheit 142 auch Zusatzdaten, die Eigenschaften gespeicherter Ziele beschreiben. Die Speichereinheit 142 kann einen für diesen Zweck reservierten nichtflüchtigen Speicherbaustein aufweisen, zum Beispiel einen EEPROM (electrically ereasable programmable read only memory). Alternativ oder zusätzlich kann die Speichereinheit 142 ein Festplattenlaufwerk mit eingebauter Festplatte, einen Festspeicher (engl. solid-state-drive) mit einer Speicherkarte und/oder ein individuelles EEPROM-Bauelement aufweisen.

In der gezeigten Ausführungsform entspricht die Speichereinheit 142 einem zu diesem Zweck reservierten Speicherbereich einer nichtflüchtigen Speichereinrichtung 140, in der weitere Speicherbereiche definiert sind, beispielsweise ein Speicherbereich 144 zur Ablage von Landkarteninformationen.

Eine Recheneinheit 152 des Navigationssystems 100 ist zum automatischen Auswählen eines Ziels oder mehrerer Ziele aus der Mehrzahl von Zielen eingerichtet. Der Begriff "automatisches Auswählen" ist derart zu verstehen, dass die Auswahl von der Recheneinheit selbstständig, ohne Zutun eines menschlichen Benutzers, vorgenommen wird. Die Recheneinheit kann unter anderem ein Ziel auswählen, das sich dadurch auszeichnet, dass es an keiner Position angeordnet ist, die mittels der Positionsbestimmungseinheit 170 bestimmt wurde und die in der Speichereinheit 142 gespeichert ist. Die Recheneinheit 152 kann aber auch ein Ziel auswählen, das an einer Position angeordnet ist, die mittels der Positionsbestimmungseinheit 170 bestimmt wurde und in der Speichereinheit 142 gespeichert ist.

Nach einer Weiterbildung der Erfindung berücksichtigt die Recheneinheit 152 bei der Auswahl des Ziels eine aktuelle Positions-/Zeitinformation. Die Positions-/Zeitinformation repräsentiert beispielsweise eine geografische Position, an der sich das Navigationssystem 100, die Positionsbestimmungseinheit 170 oder ein Benutzer des Navigationssystems 100 befindet. Zusätzlich oder alternativ kann die Positions-/Zeitinformation einen bis zu einer solchen Position zurückgelegten Streckenabschnitt und/oder eine aktuelle Zeit repräsentieren, beispielsweise eine Uhrzeit, einen Wochentag, einen Feiertag oder eine Folge von Feiertagen. Insbesondere kann die Positions-/Zeitinformation eine beliebige Kombination aus diesen Daten repräsentieren.

Die Recheneinheit 152 ist zudem zum Bestimmen einer voraussichtlichen Route, welche von einer aktuellen Position, beispielsweise von einer aktuellen Position der Positionsbestimmungseinheit 170, zu einem ausgewählten Ziel führt, eingerichtet. Die Recheneinheit 152 steuert ferner das Speichern der unter Verwendung der Eingabeeinheit 112 eingegebenen Daten einschließlich bevorzugter Ziele in der Speichereinheit 142 sowie die Ausgabe von Eingabeformularen, die den Benutzer bei der Eingabe der Zusatzdaten unterstützen, unter Verwendung der Ausgabeeinheit 114.

Die Recheneinheit 152 kann zum Beispiel ein in einer Rechnereinrichtung 150 implementiertes Softwaremodul sein, wobei die Rechnereinrichtung 150 neben der Recheneinheit 152 weitere Softwaremodule, beispielsweise eine Navigationseinheit 154, aufweisen kann. Die Rechnereinrichtung 150 weist beispielsweise einen Prozessor oder eine Prozessorbaugruppe auf.

Die Recheneinheit 152 kann aus den in der Speichereinheit 142 gespeicherten Zielen das voraussichtliche Ziel einer aktuellen Tour auswählen. Dazu kann die Recheneinheit eine aktuelle Positions-/Zeitinformation und/oder Zusatzdaten berücksichtigen, die den Zielen zugeordnet sind.

Die gespeicherten Ziele und die zugehörigen Zusatzdaten liegen beispielsweise in Form von Datensätzen vor. Jeder der Datensätze ordnet einem der Ziele eine Positionsinformation für einen typischen Startort oder mehrere typische Startorte für Touren zum Ziel, einen typischen Zeitpunkt des Starts der Tour zum Ziel, einen Wochentag, zum Beispiel einen Werktag, einen Wochenendtag, einen Feiertag oder eine Folge von Feiertagen (zum Beispiel an Ostern Karfreitag und Ostersonntag), an denen das Ziel typischerweise angesteuert wird, und/oder Daten zur Funktion des Ziels zu. Ferner können die Zusatzdaten eine Häufigkeit aufweisen, mit der das Ziel angesteuert wurde. Die Zusatzdaten weisen demnach mindestens eine Information aus einer Gruppe von Informationen auf, die eine Position eines typischen Startortes für Touren zum Ziel, eine typische Startzeit zum Ziel, eine Häufigkeit, mit der das Ziel angefahren wurde, und eine Funktion des Ziels repräsentieren. Nach einer Ausführungsform der Erfindung weisen die Zusatzdaten zusätzlich Daten aus einem angelernten Bewegungsprofil auf.

Die Recheneinheit 152 kann nach einer vollständigen Übereinstimmung zwischen den Zusatzdaten der Datensätze für die gespeicherten Ziele und einer aktuellen Positions-/Zeitinformation suchen. Wenn keine vollständige Übereinstimmung feststellbar ist, kann die Recheneinheit 152 aus den Zielen dasjenige Ziel als voraussichtliches Ziel auswählen, für welches die größte Übereinstimmung zwischen der Positions-/Zeitinformation und den Zusatzdaten ermittelt wird. Zusätzlich kann bei der Auswahl des Ziels die Häufigkeit, mit der die Ziele jeweils angesteuert werden, berücksichtigt werden. Nach einer weiteren Ausführungsform der Erfindung kann der Benutzer das Ziel aus einer von der Recheneinheit 152 ermittelten Liste mit mehreren wahrscheinlichen Zielen auswählen.

Von der aktuellen Position der Positionsbestimmungseinheit 170 aus zum voraussichtlichen Ziel kann mindestens eine voraussichtliche Route ermittelt werden. Dabei kann die voraussichtliche Route oder eine Information, die die voraussichtliche Route spezifiziert, als Teil der dem voraussichtlichen Ziel zugeordneten Zusatzdaten in der Speichereinheit 142 vorliegen. Gemäß einer anderen Ausführungsform der Erfindung kann die voraussichtliche Route durch eine Navigationseinheit 154 anhand von Landkarteninformationen ermittelt werden, die in dem Speicherbereich 144 der Speichereinrichtung 140 abgelegt sind, wobei die Navigationseinheit 154 eine selbständige Baugruppe ist oder als eines von mehreren Softwaremodulen in der Rechnereinrichtung 150 integriert ist. Gemäß einer Ausführungsform der Erfindung kann die Navigationseinheit 154 zur Ermittlung der voraussichtlichen Route weitere, etwa durch Aufzeichnung früherer Touren gewonnene, Tourdaten sowie Bewegungsmuster nutzen, um, zum Beispiel bei Vorliegen mehrerer im Wesentlichen gleichwertiger Varianten, die Schätzung für die voraussichtliche Route zu verbessern.

Für die voraussichtliche Route kann die Rechnereinrichtung 150 die Ausgabe einer Streckeninformation über eine Schnittstelleneinheit 190 veranlassen. Die Streckeninformation kann eine aktuelle Verkehrsinformation zur voraussichtlichen Route oder ein Höhenprofil der voraussichtlichen Route aufweisen. Die Verkehrsinformation weist beispielsweise Verkehrsstörungsmeldungen auf. Das Höhenprofil kann Angaben über Gefällestrecken, Steigungen, Wegbeschaffenheit, Geschwindigkeitsbegrenzungen und/oder Schnellfahrstrecken aufweisen und kann mindestens zum Teil in der Landkarteninformation enthalten sein.

Die Schnittstelleneinheit 190 kann eine Schnittstelle zur Ausgabeeinheit 114 aufweisen, zum Beispiel eine Verbindungsleitung oder einen Treiberbaustein. An die Ausgabeeinheit 114 werden beispielsweise Verkehrsstörungsmeldungen auf der voraussichtlichen Route ausgegeben, die von der Ausgabeeinheit 114 optisch und/oder akustisch wiedergegeben werden.

Gemäß einer Ausführungsform der Erfindung weist die Schnittstelleneinheit 190 eine Schnittstelle zu einem fahrzeuginternen Steuergerät oder zu einem fahrzeuginternen Bussystem, zum Beispiel CAN (controller area network), FlexRay oder MOST (media oriented systems transport bus) auf, an das weitere fahrzeuginterne Steuergeräte angeschlossen sein können. Beispielsweise weist die Schnittstelleneinheit 190 einen Interface-Schaltkreis für das Bussystem auf. Unter Verwendung der Schnittstelleneinheit 190 kann die Rechnereinrichtung 150 eine Streckeninformation ausgeben, anhand derer fahrzeuginterne Steuersysteme beispielsweise Batterieladezyklen mit vorhergesagten Gefällestrecken synchronisieren, Motoröl-und Kühlmitteltemperatur für vorhergesagte Schnellfahrstrecken vortemperieren oder Ladezyklen für Akkumulatoren in Hybridantrieben optimieren können.

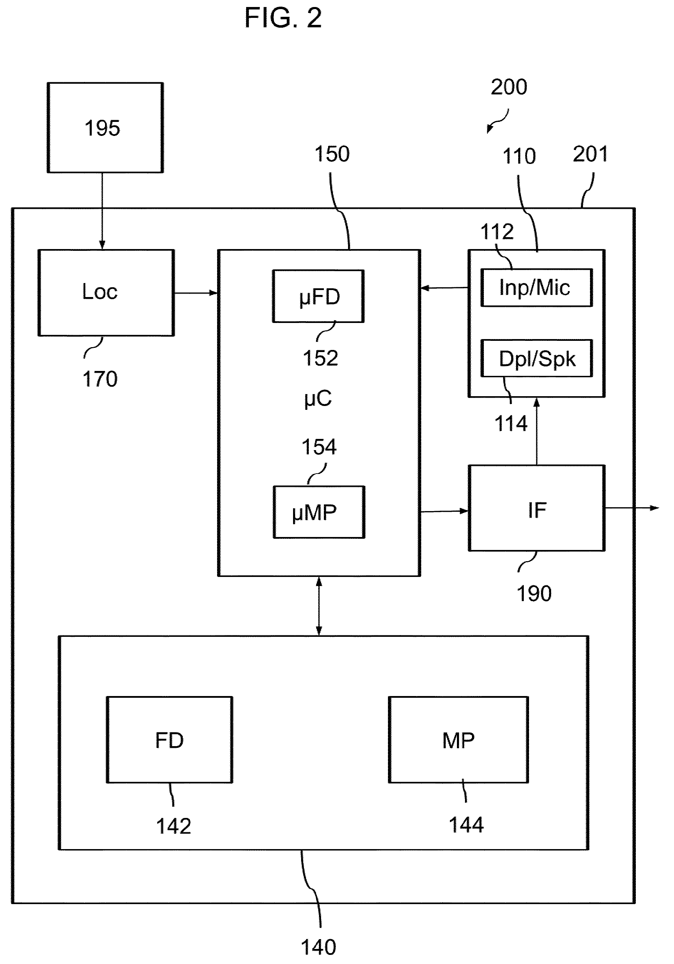

**FIG. 2** zeigt ein Navigationsgerät 200, in dessen Gehäuse 201 die Eingabeeinheit 112, die Ausgabeeinheit 114, die Rechnereinrichtung 150 mit der Recheneinheit 152 und der Navigationseinheit 154, die Speichereinrichtung 140 mit der Speichereinheit 142 und dem Speicherbereich 144, sowie die Positionsbestimmungseinheit 170 integriert sind, wobei die Positionsbestimmungseinheit 170 mit der außerhalb des Navigationsgeräts 200 angeordneten Empfangseinheit 195 verbunden ist.

Das Navigationsgerät 200 ist in einem Fahrzeug (nicht gezeigt) installiert, d.h. fest in dem Fahrzeug eingebaut. Alternativ kann das Navigationsgerät 200 so abgelegt oder angebracht sein, dass es leicht aus dem Fahrzeug beziehungsweise von dem Fahrzeug entnehmbar ist. Als eine weitere Alternative kann das Navigationsgerät 200 von einem Benutzer am Körper getragen werden.

Die Positionsbestimmungseinheit 170 kann anhand empfangener Positionssignale ihre aktuelle Position bestimmen und an die Rechnereinrichtung 150 weitergeben. Die Rechnereinrichtung 150 ist eingerichtet, aus der aktuellen Position eine aktuelle Positions-/Zeitinformation zur Ziel-und Routenabschätzung abzuleiten. Gemäß einer Ausführungsform der Erfindung wertet die Rechnereinrichtung 150 laufend die empfangenen Positionssignale aus, um die Schätzung für das voraussichtliche Ziel und/oder die voraussichtliche Route anzupassen, falls die aktuelle Position nicht mit einer geschätzten voraussichtlichen Route übereinstimmt.

Im gezeigten Ausführungsbeispiel ist die aktuelle Position der Positionsbestimmungseinheit 170 identisch mit der aktuellen Position des Navigationsgerätes 200. Die Positionen, die von dem Navigationsgerät 200 erreicht werden, wenn das Navigationsgerät 200 in einem Gebiet bewegt wird, und die mittels der Positionsbestimmungseinheit 170 bestimmt und in der Speichereinheit 142 gespeichert werden, entsprechen somit den Positionen der Positionsbestimmungseinheit 170.

Die Rechnereinrichtung 150 kann zudem die Eingabe von Funktionsinformationen zu den bevorzugten Zielen sowie deren Verwaltung steuern, wobei die Funktionsinformationen in die Schätzung des voraussichtlichen Ziels und/oder der voraussichtlichen Route eingehen können.

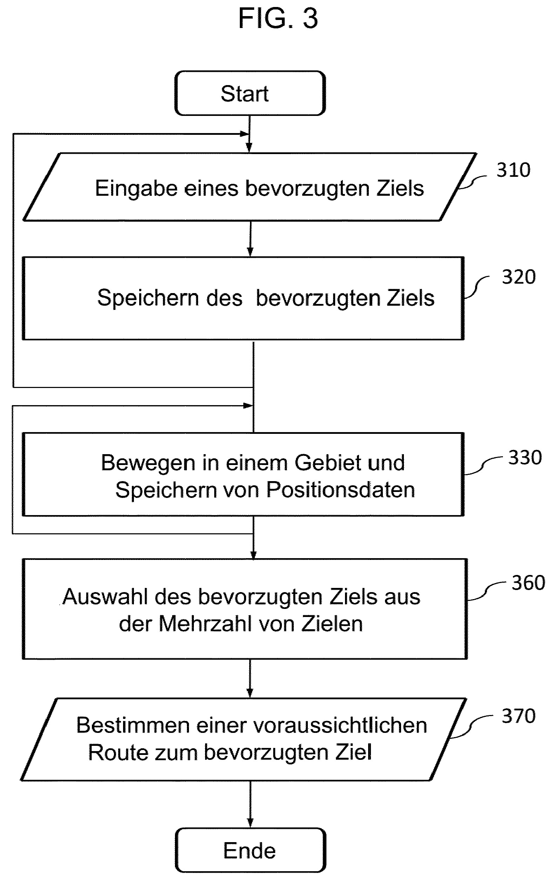

Im Folgenden wird neben FIG. 1 und FIG. 2 auch auf **FIG. 3** Bezug genommen. Das in FIG. 3 dargestellte Verfahren weist zwei Verfahrensabschnitte auf, die zeitlich und örtlich voneinander getrennt und unabhängig voneinander ausgeführt werden können. Das Verfahren kann sowohl mit dem in FIG. 1 dargestellten Navigationssystem 100 als auch mit dem in FIG. 2 dargestellten Navigationsgerät 200 ausgeführt werden.

Der erste Verfahrensabschnitt weist eine Eingabe eines Ziels (Verfahrensschritt 310) und ein Speichern (Verfahrensschritt 320) des Ziels auf, wobei das Ziel als bevorzugtes Ziel gekennzeichnet wird. Das Kennzeichnen des Ziels als bevorzugtes Ziel bewirkt, dass nur dann eine zu dem Ziel führende Route mittels des Navigationssystems 100 berechnet wird, wenn das Ziel aus einer Mehrzahl in der Speichereinheit 142 gespeicherter Ziele mittels der Recheneinheit 152 automatisch ausgewählt wurde. Folglich wird im Gegensatz zu einer herkömmlichen Zieleingabe vorerst, das heißt unmittelbar nach der Zieleingabe, noch keine Routenberechnung zu dem Ziel ausgeführt. Daher kann vorerst auch noch keine Zielführung zu dem Ziel ausgeführt werden, wobei unter dem Begriff "Zielführung" ein Prozess verstanden wird, der einen Benutzer entlang einer Route zu dem Ziel leitet.

Die Eingabe des Ziels in Verfahrensschritt 310 nimmt ein Benutzer unter Verwendung der Eingabeeinheit 112 vor, wobei das Ziel beispielweise einem Fahrzeug und/oder einem Benutzer zugeordnet werden kann.

Nach einer Ausführungsform der Erfindung erfolgt die Eingabe menügestützt, indem mit der Ausgabeeinheit 114 ein spezielles Eingabeformular ausgegeben wird, das ausschließlich für bevorzugte Ziele verwendet wird. Das Eingabeformular wird folglich nicht für Ziele verwendet, für die eine Route mittels des Navigationssystems 100 berechnet wurde, ohne dass das jeweilige Ziel aus der Mehrzahl von Zielen mittels der Recheneinheit 152 automatisch ausgewählt wurde. In die Eingabefelder des Eingabeformulars kann der Benutzer die von ihm am häufigsten angesteuerten Ziele eingeben, beispielsweise seinen Wohnsitz, die Adresse seiner Arbeitsstätte oder die Adressen von regelmäßig angefahrenen Ausflugszielen, Freizeiteinrichtungen und Verkaufsstellen. Das Eingabeformular wird von dem Benutzer, beispielsweise auf dem Navigationssystem 100 oder auf dem Navigationsgerät 200, aufgerufen. Alternativ kann der Benutzer das Eingabeformular auf einer Webseite oder mittels einer Applikation auf einem mobilen Datenendgerät aufrufen. Neben den Eingabefeldern für ein bevorzugtes Ziel kann das Eingabeformular weitere Eingabefelder aufweisen, beispielsweise zur Eingabe einer bevorzugten Route zu dem bevorzugten Ziel, sowie Eingabefelder oder Auswahllisten zur Eingabe weiterer Parameter wie Uhrzeit, Kalenderinformation und/oder Funktion des bevorzugten Ziels.

Eine alternative oder zusätzliche Möglichkeit zur Eingabe eines bevorzugten Ziels in Verfahrensschritt 310 ist eine Abfrage des Navigationssystems 100 an den Benutzer, ob seine aktuelle Position beziehungsweise die aktuelle Position des Navigationsgeräts 200 als bevorzugtes Ziel festzulegen ist. Beispielsweise kann eine solche Abfrage durch das Navigationsgerät 200 automatisch ausgeführt werden, sobald am Ende einer Fahrt ein Antriebssystem des Fahrzeugs abgeschaltet wird, am Beginn einer Fahrt die Starterbatterie des Fahrzeugs mit Niedrigstromverbrauchern verbunden wird oder das Navigationsgerät 200 eingeschaltet wird.

Eine weitere alternative oder zusätzliche Möglichkeit zur Eingabe eines bevorzugten Ziels in Verfahrensschritt 310 besteht darin, dass in das Navigationsgerät 200 zunächst in herkömmlicher Weise ein Ziel eingegeben wird. Das Navigationsgerät 200 führt eine Abfrage an den Benutzer aus, ob es sich bei dem Ziel um ein bevorzugtes Ziel handelt. Wenn der Benutzer dies bejaht, indem er ein bestimmtes Bedienelement des Navigationsgeräts 200 betätigt, wird das Ziel als bevorzugtes Ziel gekennzeichnet.

Optional kann ein weiteres Ziel in das Navigationsgerät 200 eingegeben und als ein bevorzugtes Ziel gekennzeichnet werden. Das Kennzeichnen bewirkt, dass nur dann eine zu dem weiteren Ziel führende Route mit dem Navigationsgerät 200 berechnet wird, wenn das weitere Ziel aus der Mehrzahl gespeicherter Ziele automatisch ausgewählt wurde.

Nach der Eingabe des bevorzugten Ziels beziehungsweise Bestätigung des eingegebenen Ziels als bevorzugtes Ziel gibt das Navigationsgerät 200 ein weiteres Eingabeformular oder eine Auswahlliste zur Eingabe von Zusatzdaten aus, die das bevorzugte Ziel näher charakterisieren. Die Zusatzdaten können unter anderem eine Uhrzeit und einen Wochentag, zu beziehungsweise an denen das Ziel in der Regel angesteuert wird, eine Positionsinformation eines Standortes, von dem aus das bevorzugte Ziel üblicherweise angefahren wird, eine Angabe zu einer Funktion des Ziels und/oder eine Angabe zu einer Route, über die das Ziel normalerweise angesteuert wird, repräsentieren.

Nach einer weiteren Ausführungsform der Erfindung erfolgt die Eingabe des bevorzugten Ziels in Verfahrensschritt 310 in Form einer Adresse in einer Adressbuch-Applikation, wobei die Eingabe auf einem externen Gerät ausgeführt wird, beispielsweise auf einem Personal Computer (PC) oder auf einem mobilen Datenendgerät.

Das durch einen Benutzer eingegebene bevorzugte Ziel wird beim Speichern in Verfahrensschritt 320 zusammen mit den Zusatzdaten in der Speichereinheit 142 abgelegt. Sofern die Eingabe in Verfahrensschritt 310 unter Verwendung einer auf einem externen Gerät ausgeführten Adressbuch-Applikation stattfand, setzt das Speichern einen Datenimport des Ziels von dem externen Gerät voraus.

Ferner wird beim Bewegen der Positionsbestimmungseinheit 170 in einem Gebiet eine Mehrzahl von Positionen erreicht, die von der Positionsbestimmungseinheit 170 bestimmt und in der Speichereinheit 142 gespeichert werden (Verfahrensschritt 330). Da die Positionsbestimmungseinheit 170 in einem Fahrzeug angeordnet ist, entsprechen die von der Positionsbestimmungseinheit 170 erreichten und bestimmten Positionen den vom Fahrzeug erreichten Positionen.

Der zweite Verfahrensabschnitt beginnt bei Fahrtbeginn, typischerweise mit dem Starten des Fahrzeugs oder dem Einschalten des Navigationsgeräts 200. Anhand der Zusatzdaten, welche den gespeicherten Zielen zugeordnet sind, wird rechnergestützt, beispielsweise mit der Recheneinheit 152, ein Ziel aus den in der Speichereinheit 142 gespeicherten Zielen als voraussichtliches Ziel ausgewählt (Verfahrensschritt 360). Im vorliegenden Fall handelt es sich bei dem ausgewählten Ziel um das bevorzugte Ziel, das in Verfahrensschritt 310 eingegeben wurde. Abweichend davon kann auch ein Ziel ausgewählt werden, das kein bevorzugtes Ziel ist. Das heißt, es sind sowohl ein bevorzugtes Ziel als auch ein Ziel, das kein bevorzugtes Ziel ist, auswählbar.

Nach einer Weiterbildung der Erfindung wird das Ziel anhand einer aktuellen Positions-/Zeitinformation ausgewählt, die eine aktuelle Position der Positionsbestimmungseinheit 170, einen bis zu einer aktuellen Position der Positionsbestimmungseinheit 170 zurückgelegten Streckenabschnitt und/oder eine aktuelle Zeit repräsentiert.

Gemäß einer Ausführungsform der Erfindung gehört zu den in der Speichereinheit 142 gespeicherten Zielen ein Ziel, zu dem eine Route mit dem Navigationsgerät 200 berechnet wurde.

Gemäß einer weiteren Ausführungsform der Erfindung gehört zu den in der Speichereinheit 142 gespeicherten Zielen ein Ziel, zu dem eine Zielführung mit dem Navigationsgerät 200 durchgeführt wurde, das heißt ein Prozess, bei dem ein Benutzer entlang einer Route zu dem Ziel geleitet wurde.

Nach einer ersten Weiterbildung der Erfindung wählt die Recheneinheit das Ziel, für welches die größte Übereinstimmung zwischen der aktuellen Positions-/Zeitinformation und den Zusatzdaten ermittelt wird, und gibt das Ziel über die Ausgabeeinheit an den Benutzer aus. Der Benutzer kann das Ziel bestätigen oder ablehnen. Bei einer Bestätigung beziehungsweise ausbleibender Ablehnung gilt das ausgewählte Ziel als voraussichtliches Ziel. Neben dem ausgewählten Ziel können auch solche Ziele ausgegeben werden, zu denen jeweils eine Routenberechnung mit dem Navigationsgerät durchgeführt wurde.

Nach einer anderen Ausführungsform der Erfindung wählt die Recheneinheit mehrere Ziele aus und gibt die Ziele über die Ausgabeeinheit an den Benutzer aus. Der Benutzer kann unter den ausgegebenen Zielen das von ihm tatsächlich angesteuerte Ziel auswählen, so dass das vom Benutzer ausgewählte Ziel als das voraussichtliche Ziel gilt, für das eine oder mehrere Routen ermittelt werden sollen.

Ferner wird beim Verfahrensschritt 370 eine voraussichtliche Route zu dem ausgewählten Ziel mittels der Navigationseinheit 154 bestimmt, wobei aktuelle Verkehrsinformationen berücksichtigt werden können. Nach einer weiteren Ausführungsform der Erfindung ist die voraussichtliche Route bereits in den Zusatzdaten, die dem ausgewählten Ziel zugeordnet sind, enthalten oder durch diese identifizierbar. Die voraussichtliche Route kann auf Benutzereingaben und/oder auf einem aufgezeichneten Bewegungsprofil beruhen. Beispielsweise kann die voraussichtliche Route einer Route entsprechen, die in der Vergangenheit von der Navigationseinheit 154 berechnet oder zurückgelegt wurde.

Die Auswahl des Ziels in Verfahrensschritt 360 und das Bestimmen der voraussichtlichen Route zum Ziel in Verfahrensschritt 370 können ineinander verschränkt sein. Zum Beispiel wird aus einem bereits zurückgelegten Streckenabschnitt auf eine voraussichtliche Route geschlossen und diese mit dem Ziel abgeglichen. Nach einer Ausführungsform der Erfindung wird zunächst das Ziel ausgewählt, wonach die Navigationseinheit die voraussichtliche Route zu dem Ziel ermittelt beziehungsweise mehrere Routenvorschläge anbietet.

Im Vergleich zu einem Navigationsverfahren, das mit einem herkömmlichen selbstlernenden Navigationsgerät ausgeführt wird, liefert das erfindungsgemäße Verfahren eine potentiell höhere Übereinstimmung eines voraussichtlichen Ziels mit einem tatsächlichen Ziel.

Ferner kann das erfindungsgemäße Verfahren in Kombination mit einem herkömmlichen selbstlernenden Navigationsverfahren ausgeführt werden.

Das erfindungsgemäße Verfahren kann insbesondere ausgeführt werden, ohne Fahrdaten zu zurückgelegten Strecken zu sammeln. Da im Allgemeinen der überwiegende Teil aller Fahrten einer Person zu einer geringen Anzahl unterschiedlicher Ziele führt, reicht oftmals schon die Eingabe von vergleichsweise wenigen, zum Beispiel weniger als zehn, bevorzugten Zielen aus, um eine ähnliche gute Vorhersage für das voraussichtliche Ziel zu erzielen wie herkömmliche selbstlernende Navigationsgeräte nach einer längeren Lernphase.

Wird das vorliegende Verfahren dagegen in einem selbstlernenden Navigationsgerät eingesetzt, kann es dessen Vorhersagesicherheit verbessern. Umgekehrt können die Ergebnisse eines selbstlernenden Navigationsgeräts dazu benutzt werden, die Routenschätzung zu dem ausgewählten Ziel zu verbessern und dem Benutzer die Route vorzuschlagen, die er aufgrund eines gespeicherten Bewegungsprofils mit hoher Wahrscheinlichkeit von der aktuellen Position des Fahrzeugs aus zur aktuellen Zeit befahren wird. Der Routenvorschlag ist unabhängig von Routen, die das Navigationsgerät bereits berechnet hat.

Nach einer Weiterbildung der Erfindung weist der erste Verfahrensabschnitt alternativ oder zusätzlich zur Eingabe von Zusatzdaten die Ausgabe eines Eingabe- oder Auswahlformulars für die Funktion des bevorzugten Ziels auf. Beispiele für solch eine Funktion sind "Arbeit" für Fahrten zur Arbeitsstelle, "Wohnsitz" für Fahrten zum Wohnsitz, "Einkauf" für Fahrten zu Geschäften und Märkten, "Schule", "Kindergarten", "Sport" usw.

Beim Auswählen des voraussichtlichen Ziels im zweiten Verfahrensabschnitt kann die Rechnereinrichtung 150 die Funktion mit einer allgemeingültigen Information verknüpfen. Die allgemeingültige Information kann vorab abgelegt sein, zum Beispiel lokal in der Speichereinrichtung 140 oder extern in einem Cloud-Server. Die Information berücksichtigt, dass manches bevorzugte Ziel aufgrund seiner Funktion unter bestimmten Umständen mehr oder weniger wahrscheinlich ist. Zum Beispiel wird an einem Werktagmorgen einer Fahrt zu einem Ziel mit der Funktion "Arbeit" eine größere Wahrscheinlichkeit eingeräumt als einer Fahrt zu einem Ziel mit der Funktion "Einkaufen".

Alternativ oder zusätzlich zur Berücksichtigung der allgemeingültigen Information werden aus der Funktion eines Ziels in Verbindung mit den gesammelten Fahrdaten weitere benutzerspezifische Information gewonnen, die in die Schätzung des voraussichtlichen Ziels und der voraussichtlichen Route eingehen können. Beispielsweise kann die Rechnereinrichtung 150 das gespeicherte Bewegungsprofil auf Muster für wiederholte Kombinationen von Fahrten unterschiedlicher Funktion an unterschiedlichen Wochentagen prüfen und die Wahrscheinlichkeit für solche Kombinationen bei der Schätzung eines voraussichtlichen Ziels und einer voraussichtlichen Route berücksichtigen. Eine derartige Fahrtkombination stellen beispielsweise kurz aufeinanderfolgende Fahrten zu Zielen mit der Funktion "Kindergarten" und der Funktion "Arbeit" an bestimmten Werktagen oder aufeinander folgende Fahrten zu Zielen mit der Funktion "Einkaufen" und der Funktion "Wohnsitz" in einem bestimmten typischen zeitlichen Abstand dar.

Das Verfahren kann mit dem Navigationsgerät 200 durchgeführt werden, das alle für die Ausführung des Verfahrens erforderlichen Einrichtungen aufweist. Gemäß einer anderen Ausführungsform der Erfindung werden die Verfahrensschritte mit verschiedenen, voneinander örtlich getrennten und informationstechnisch nur temporär miteinander verbundenen Geräten ausgeführt, zum Beispiel, indem der erste Verfahrensabschnitt unter Verwendung einer Applikation auf einem portablen Datenendgerät oder mit einem Computer durchgeführt wird.

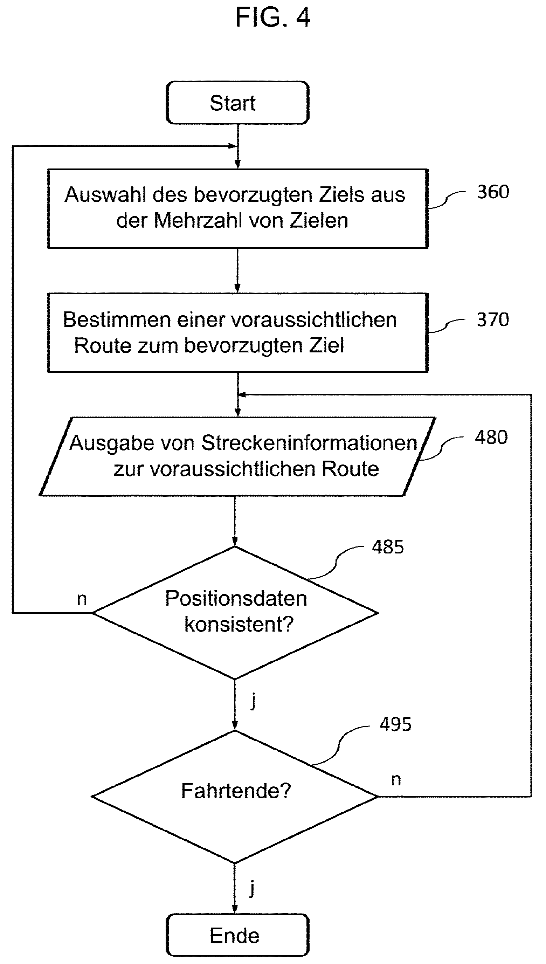

Im Folgenden wird neben FIG. 1, FIG. 2 und FIG. 3 auch auf **FIG. 4** Bezug genommen. FIG. 4 zeigt eine Ausführungsform des zweiten Verfahrensabschnitts, bei der unter Verwendung der Recheneinheit 152 ein Ziel aus den in der Speichereinheit 142 gespeicherten Zielen ausgewählt wird (Verfahrensschritt 360). Im vorliegenden Fall handelt es sich bei dem Ziel um das in Verfahrensschritt 310 eingegebene bevorzugte Ziel. Ferner wird eine voraussichtliche Route zu dem Ziel bestimmt (Verfahrensschritt 370). Danach findet eine regelmäßige Überprüfung (Verfahrensschritt 485) dahingehend statt, ob die von der Positionsbestimmungseinheit 170 übermittelten aktuellen Positionsdaten eine Position auf der voraussichtlichen Route angeben. Weichen die aktuellen Positionsdaten über einen längeren Zeitraum signifikant von der voraussichtlichen Route ab oder lässt sich unter Zuhilfenahme der Landkarteninformation darauf schließen, dass die Positionsbestimmungseinheit 170 von der voraussichtlichen Route abgewichen ist, werden die Auswahl des Ziels und das Bestimmen der voraussichtlichen Route wiederholt.

Bis zum Feststellen des Fahrtendes im Verfahrensschritt 495 werden unter Verwendung der Schnittstelleneinheit 190 eine oder mehrere Streckeninformationen zu der voraussichtlichen Route ausgegeben (Verfahrensschritt 480). Die Streckeninformationen können eine aktuelle Verkehrsinformation für die voraussichtliche Route aufweisen, die beispielsweise durch ein Empfangsgerät empfangen wurde und unter Verwendung der Ausgabeeinheit 114 an einen Benutzer ausgegeben wird. Die Verkehrsinformation ist unter anderem als ein Piktogramm (engl. Icon) neben einer Darstellung der voraussichtlichen Route anzeigbar. Das Navigationsgerät 200 kann ferner eine oder mehrere Alternativrouten zum Ziel berechnen und über die Ausgabeeinheit 114 ausgeben, wenn für die voraussichtliche Route eine Verkehrsstörung vorliegt.

Gemäß einer anderen Ausführungsform der Erfindung weist die Streckeninformation ein Höhenprofil der voraussichtlichen Route auf, das an ein fahrzeuginternes Steuersystem ausgegeben und von diesem verarbeitet wird. Das fahrzeuginterne Steuersystem kann Batterieladezyklen an das Höhenprofil anpassen, zu optimalen Zeitpunkten Motoröl- und Kühlmitteltemperatur für vorhergesagte Schnellfahrstrecken erhöhen und/oder bei einem Hybridantrieb einen Ladezyklus für einen Akkumulator optimieren.

Nach einer weiteren Ausführungsform der Erfindung überwacht die Recheneinheit 152 zudem die Eingabe eines Ziels mittels der Eingabeeinheit 112. Solange der Benutzer kein Ziel eingegeben hat, für welches die Navigationseinheit 154 eine Route ermitteln soll, bleiben das von der Recheneinheit 152 ausgewählte Ziel und die voraussichtliche Route für die Ausgabe einer Streckeninformation verbindlich. Sobald der Benutzer ein Ziel eingegeben und die Navigationseinheit 154 eine Route zu dem eingegebenen Ziel ermittelt hat, lösen das eingegebene Ziel und die zugehörige Route das ausgewählte Ziel und die zugehörige Route als Grundlage für die Ausgabe der Streckeninformation ab.

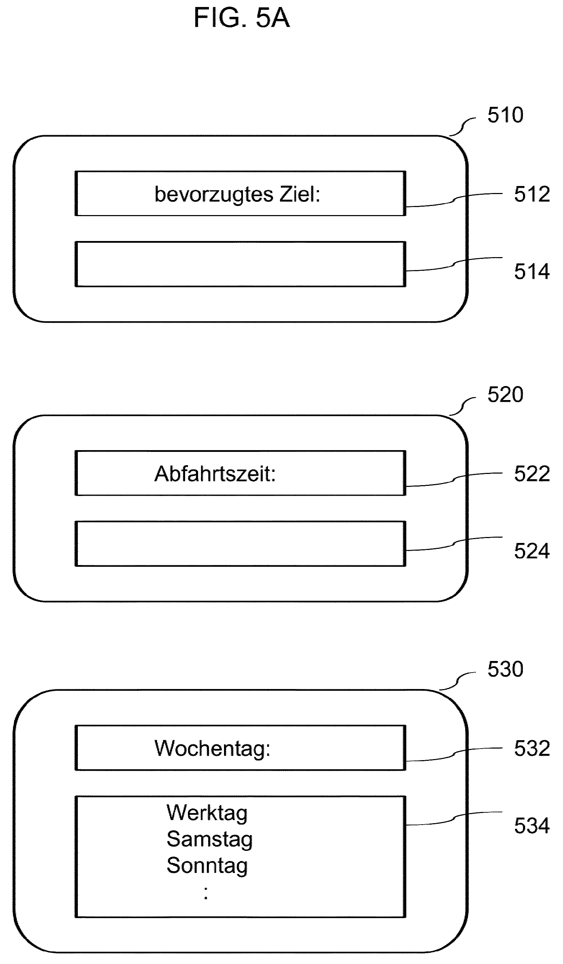

Im Folgenden wird neben FIG. 1 und FIG. 2 auch auf die FIG. 5A bis 5C Bezug genommen. Die FIG. 5A bis 5C zeigen schematisch Eingabeformulare für die verschiedenen Eingabevarianten für die bevorzugten Ziele gemäß weiteren Ausführungsformen der Erfindung.

Bei der Eingabevariante gemäß **FIG. 5A** findet die Eingabe eines bevorzugten Ziels menügeführt statt. Dazu ruft der Benutzer ein Menü zur Eingabe des Ziels auf. Das Menü kann mit dem Navigationsgerät 200, auf einer Webseite oder in einer Applikation für ein mobiles Datenendgerät, zum Beispiel für ein Mobiltelefon, aufgerufen werden. Auf den Menüaufruf hin gibt eine Ausgabeeinheit ein Eingabeformular aus.

Das Eingabeformular weist beispielsweise ein Hauptformular 510 mit einem Eingabetitel 512, der die erwartete Eingabe beschreibt, zum Beispiel "bevorzugtes Ziel", sowie mit einem Eingabefeld 514, in dem der vom Benutzer eingegebene und das Ziel identifizierende Eingabetext erscheint, auf. Der Eingabetext kann jeder Text sein, der auch für herkömmliche Navigationsgeräte als Eingabetext für die Zielangabe üblich ist, zum Beispiel eine Adresseingabe mit Angabe von Ort, Straßenname und Hausnummer einer Zieladresse.

Das Eingabeformular kann ferner ein Hilfsformular 520 mit einem Eingabetitel 522 für optionale Eingaben, zum Beispiel "typische Abfahrtsuhrzeit", "Tage", "Funktion" usw. und ein dazugehöriges weiteres Eingabefeld 524 für die typische Abfahrtsuhrzeit, den typischen Wochentag für eine Fahrt oder die Funktion des im Eingabefeld 514 des Hauptformulars 510 eingegebenen bevorzugten Ziels aufweisen. Anstelle des Hilfsformulars 520 oder zusätzlich zum Hilfsformular 520 kann das Eingabeformular auch ein Auswahlformular 530 mit einem Auswahltitel 532 und einer Auswahlliste 534 aufweisen, zum Beispiel zur Auswahl des typischen Wochentags für die Fahrt zum jeweiligen bevorzugten Ziel oder zur Eingabe der Funktion des Ziels, beispielsweise "Arbeit", "Wohnsitz", "Kindergarten" usw. Die Auswahlliste 534 kann durch den Benutzer editiert werden, zum Beispiel durch Hinzufügen benutzerspezifischer Einträge.

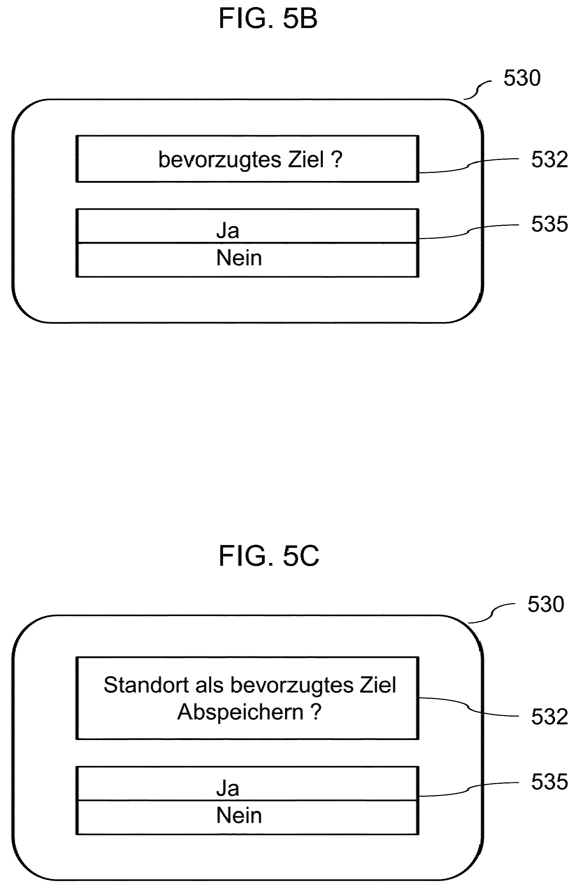

Bei der Eingabevariante gemäß **FIG. 5B** wird die Eingabe eines bevorzugten Ziels durch eine zusätzliche Abfrage nach Eingabe eines Ziels in das Navigationsgerät 200 realisiert. Zum Beispiel gibt das Navigationsgerät 200 unter Verwendung der Ausgabeeinheit 114 eine Abfrage an den Benutzer aus, ob es sich bei einem gerade in das Navigationsgerät 200 eingegebenen Ziel um ein bevorzugtes Ziel handelt. Beispielsweise wird mit der Ausgabeeinheit 114 ein Auswahlformular 530 ausgegeben, dessen Auswahltitel 532 die erwartete Auswahl beschreibt, zum Beispiel "Eingabe als bevorzugtes Ziel bestätigen?" Die Auswahlliste 535 des Auswahlformulars 530 weist zum Beispiel die Listenelemente "Ja" und "Nein" auf.

**FIG. 5C** bezieht sich auf eine weitere Ausführungsform der Erfindung, bei der die Eingabe eines bevorzugten Ziels durch eine Abfrage seitens des Navigationsgeräts 200 realisiert wird. Zum Beispiel gibt das Navigationsgerät 200 nach Ausschalten des Fahrzeugantriebs oder beim Start einer neuen Fahrt mit der Ausgabeeinheit 114 eine Anfrage an den Benutzer aus, ob die aktuelle Position als bevorzugtes Ziel zu betrachten ist. Beispielsweise wird unter Verwendung der Ausgabeeinheit 114 ein Auswahlformular 530 ausgegeben, dessen Auswahltitel 532 die erwartete Auswahl beschreibt, zum Beispiel "Standort als bevorzugtes Ziel bestätigen?" und dessen Auswahlliste 535 die Listenelemente "Ja" und "Nein" aufweist.

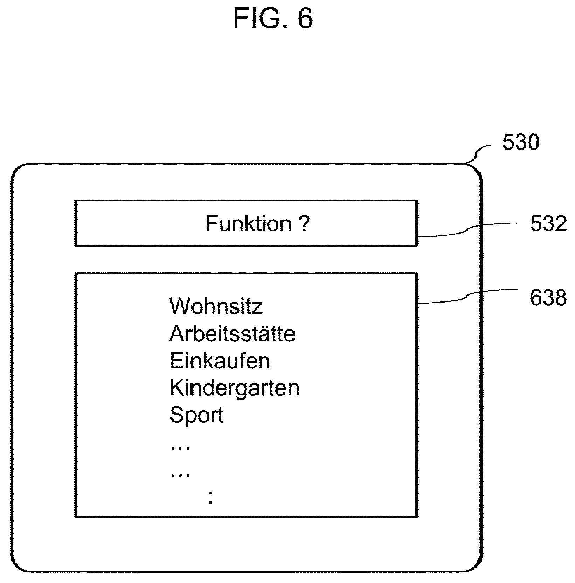

Im Folgenden wird neben FIG. 1 und FIG. 2 auch auf die FIG. 6 bis 8 Bezug genommen. **FIG. 6** zeigt ein Beispiel für ein einfaches Auswahlformular 530 zur Eingabe einer Funktion eines zuvor eingegebenen bevorzugten Ziels. Das Auswahlformular 530 wird beispielsweise unter Verwendung der Ausgabeeinheit 114 ausgegeben. Der Auswahltitel 532 des Auswahlformulars 530 enthält einen die Auswahl erklärenden Text, zum Beispiel "Funktion des Ziels". Die Auswahlliste 638 des Auswahlformulars umfasst zum Beispiel die Listenelemente "Wohnsitz", "Arbeitsplatz", "Friseur" usw. Das Auswahlformular 530 kann in jedem der Eingabeformulare aus den FIG. 5A bis 5C enthalten sein. Gemäß einer Ausführungsform der Erfindung kann zusätzlich zu jeder Funktion eine Bezeichnung eingegeben werden, unter der die Fahrt mit der Ausgabeeinheit 114 ausgegeben wird und eine Klassifizierung der Ziele ermöglicht wird.

Ein weiteres mit dem Navigationsgerät 200 durch einen Benutzer jederzeit aufrufbares Auswahlformular kann das Abschalten der automatisierten Aufzeichnung der Fahrten betreffen, wobei der Auswahltitel zum Beispiel den Text "Privates Fahren" und die Auswahlliste die Listenelemente "Ja" und "Nein" umfassen kann.

Anders als bei herkömmlichen selbstlernenden Navigationsgeräten bleibt bei dem erfindungsgemäßen Navigationsgerät die Wahrscheinlichkeit für eine zutreffende Schätzung von voraussichtlichem Ziel und voraussichtlicher Route auch nach langem Fahren ohne Fahrdatenaufzeichnung vergleichsweise hoch.

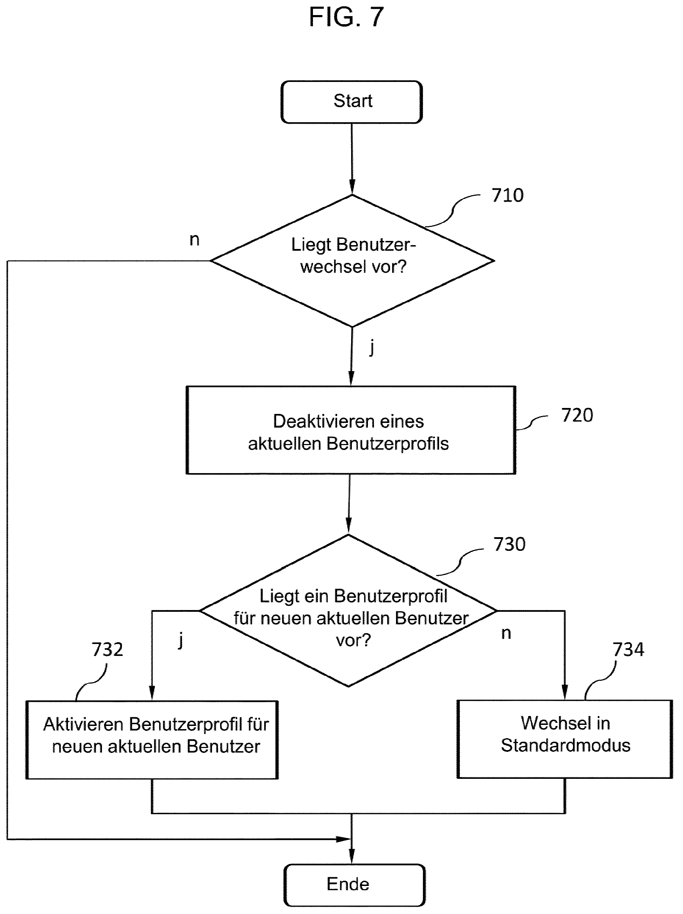

**FIG. 7** zeigt einen Benutzerwechsel und eine Verwaltung von Benutzerprofilen, welche jeweils ein bevorzugtes Ziel und Zusatzdaten aufweisen. Das Fahrzeug beziehungsweise das Navigationsgerät 200 weist mehr als einen Benutzer auf, wobei als Benutzer eine Person gilt, die das Ziel einer Fahrt festlegt.

Vor Fahrtbeginn liegt in der Speichereinrichtung 140 für einen Benutzer oder für mehrere Benutzer jeweils ein benutzerspezifisches Benutzerprofil vor, das ein bevorzugtes Ziel oder mehrere bevorzugte Ziele sowie Zusatzdaten zu den bevorzugten Zielen aufweist. Eines der Benutzerprofile gilt als aktuelles Benutzerprofil, das zur Schätzung von Ziel und Route einer aktuellen Fahrt verwendet wird. Das aktuelle Benutzerprofil ist beispielsweise das Benutzerprofil des Benutzers einer vorangegangenen Fahrt.

Bei oder nach Beginn der aktuellen Fahrt prüft die Recheneinheit 152 im Verfahrensschritt 710, ob ein Benutzerwechsel stattgefunden hat und ob der Benutzer für die aktuelle Fahrt mit dem Benutzer des aktuellen Benutzerprofils übereinstimmt. Der Benutzer für die aktuelle Fahrt kann beispielsweise über eine individualisierte Zutrittsberichtigung zum Fahrzeug, über einen Sensor, beispielsweise einen Gewichtssensor eines Fahrersitzes, über eine am Fahrersitz eingestellte Sitzposition oder durch eine Eingabe an der Eingabeeinheit identifizierbar sein.

Ist der aktuelle Benutzer nicht mit dem Benutzer des aktuellen Benutzerprofils identisch, kann an der Ausgabeeinheit 114 eine Abfrage ausgegeben werden, ob für die aktuelle Fahrt das Benutzerprofil des vorigen Benutzers und damit dessen bevorzugte Ziele zur Routenschätzung verwendet werden sollen. Lehnt der aktuelle Benutzer ab, so wird das aktuelle Benutzerprofil deaktiviert (Verfahrensschritt 720) und dabei von der Recheneinheit 152 als "inaktiv" markiert.

Gemäß einer Ausführungsform der Erfindung kann ein Benutzer festlegen, ob sein Benutzerprofil als privat zu behandeln ist, d.h. keinem anderen Benutzer zur Verfügung gestellt werden soll. Bei dieser Ausführungsform wird, wenn der aktuelle Benutzer nicht mit dem Benutzer identisch ist, das aktuelle Benutzerprofil automatisch deaktiviert.

Gemäß einer Weiterbildung wechselt in Verfahrensschritt 734 das Navigationsgerät 200 in einen Standardmodus, der beispielsweise in Werkseinstellungen des Navigationsgeräts 200 definiert ist. Im Standardmodus kann durch Speichern von durch den aktuellen Benutzer eingegebenen bevorzugten Zielen und Speichern von Zusatzdaten zu den bevorzugten Zielen ein Benutzerprofil für den aktuellen Benutzer neu angelegt oder ergänzt werden.

Gemäß einer anderen Weiterbildung der Erfindung prüft die Recheneinheit 152 vor dem Wechsel in den Standardmodus (Verfahrensschritt 734), ob in der Speichereinrichtung 140 für den aktuellen Benutzer bereits ein in der Vergangenheit angelegtes Benutzerprofil vorliegt (Verfahrensschritt 730). Ist das der Fall, so wird das für den aktuellen Benutzer vorliegende Benutzerprofil, das bevorzugte Ziele des Benutzers und zugehörige Zusatzdaten aufweist, geladen beziehungsweise als aktuelles Benutzerprofil aktiviert (Verfahrensschritt 732) und für die aktuelle Fahrt verwendet. Durch diesen Benutzerwechsel gehen keine vormals eingegebenen bevorzugten Ziele verloren.

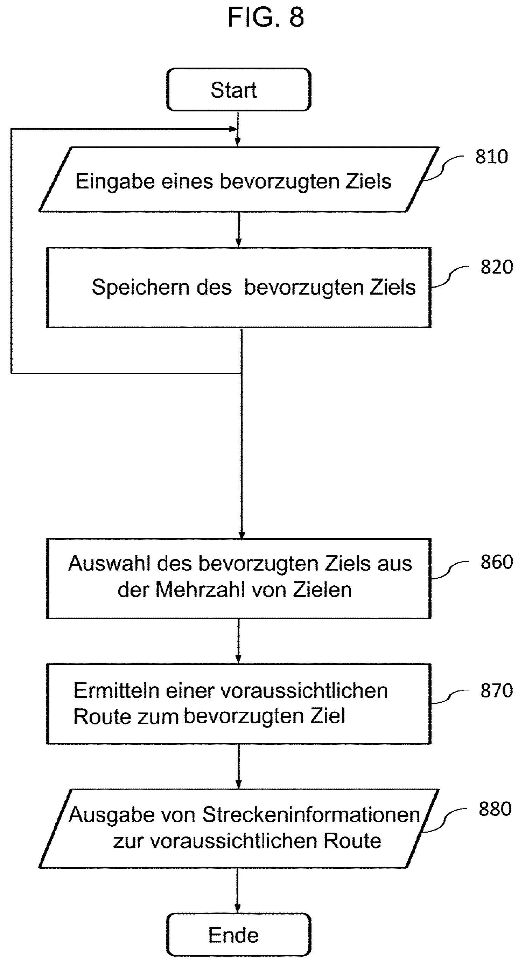

Ein in **FIG. 8** gezeigtes Verfahren zur Ausgabe einer Streckeninformation weist eine Eingabe (Verfahrensschritt 810) eines bevorzugten Ziels mit der Eingabeeinheit 112 durch einen Benutzer auf. Das bevorzugte Ziel sowie weitere Zusatzdaten, die zu dem bevorzugten Ziel gehören, werden in der Speichereinheit 142 gespeichert (Verfahrensschritt 820). Durch die Recheneinheit unterstützt, wird nach Beginn einer Fahrt anhand der Zusatzdaten sowie anhand von Positions-/Zeitinformationen aus den gespeicherten Zielen das bevorzugte Ziel als voraussichtliches Ziel ausgewählt (Verfahrensschritt 860). Mittels der Navigationseinheit 154 wird eine voraussichtliche Route zu dem Ziel bestimmt (Verfahrensschritt 870) und schließlich über eine Schnittstelleneinheit 190 eine Streckeninformation, die die voraussichtliche Route betrifft, an eine weiterverarbeitende Einheit (nicht gezeigt) ausgegeben (Verfahrensschritt 880).

Eine andere Ausführungsform der Erfindung betrifft ein Navigationssystem für ein Fahrzeug, das eine Eingabeeinheit zur Eingabe bevorzugter Ziele sowie eine Speichereinheit zum Speichern der bevorzugten Ziele sowie von weiteren, die bevorzugten Ziele betreffenden Fahrdaten aufweist. Das Navigationssystem weist ferner eine Recheneinheit zur Auswahl eines voraussichtlichen Ziels einer Fahrt aus gespeicherten Zielen und zum Ermitteln einer voraussichtlichen Route zu einem ausgewählten Ziel anhand der Fahrdaten und anhand aktueller Positions-/Zeitinformationen auf. Ferner weist das Navigationssystem eine Schnittstelleneinheit auf, die zur Ausgabe einer Streckeninformation, die die voraussichtliche Route betrifft, an eine weiterverarbeitende Einheit eingerichtet ist.

Eine weitere Ausführungsform der Erfindung betrifft ein Navigationsgerät, das mindestens die Speichereinheit, die Rechnereinheit und die Schnittstelleneinheit des oben beschriebenen Navigationssystems in einem Gehäuse integriert.

## Patentansprüche

1. Verfahren zum Bestimmen einer voraussichtlichen Route mittels eines Navigationssystems (100), welches eine Speichereinheit (142), eine Positionsbestimmungseinheit (170), eine Eingabeeinheit (112) und eine Recheneinheit (152) aufweist, mit den folgenden Schritten:
Speichern einer Mehrzahl von Zielen in der Speichereinheit (142), wobei eines der Ziele von einem Benutzer mittels der Eingabeeinheit (112) in das Navigationssystem (100) eingegeben wird,
Bewegen der Positionsbestimmungseinheit (170) in einem Gebiet, so dass die Positionsbestimmungseinheit (170) eine Mehrzahl von Positionen erreicht, wobei jede der Positionen mittels der Positionsbestimmungseinheit (170) bestimmt und in der Speichereinheit (142) gespeichert wird,
Automatisches Auswählen des Ziels aus der Mehrzahl von Zielen mittels der Recheneinheit (152), wobei das Ziel an keiner Position angeordnet ist, die mittels der Positionsbestimmungseinheit (170) bestimmt wurde und in der Speichereinheit (142) gespeichert ist, und
Bestimmen der voraussichtlichen Route, welche zu dem Ziel führt, mittels der Recheneinheit (152).

2. Verfahren gemäß Anspruch 1,
bei dem dem Ziel Zusatzdaten zugeordnet werden und das Ziel unter Berücksichtigung der Zusatzdaten ausgewählt wird.

3. Verfahren gemäß Anspruch 2,
bei dem das Zuordnen der Zusatzdaten zu dem Ziel von einem Benutzer ausgeführt wird.

4. Verfahren gemäß einem der Ansprüche 2 und 3,
bei dem die Zusatzdaten
- eine Positionsinformation,
- eine Zeitinformation,
- eine Information zu einer Häufigkeit, mit der das Ziel erreicht wurde,
- eine Information zu einer Funktion des Ziels und/oder
- Daten aus einem angelernten Bewegungsprofil
aufweisen.

5. Verfahren gemäß einem der vorhergehenden Ansprüche,
bei dem beim Eingeben des Ziels in das Navigationssystem (100) das Ziel als ein bevorzugtes Ziel gekennzeichnet wird, wobei das Kennzeichnen bewirkt, dass nur dann eine zu dem Ziel führende Route mittels des Navigationssystems (100) berechnet wird, wenn das Ziel aus der Mehrzahl von Zielen mittels der Recheneinheit (152) automatisch ausgewählt wurde.

6. Verfahren gemäß Anspruch 5,
bei dem das Ziel gekennzeichnet wird, indem das Ziel von einem Benutzer in ein bestimmtes Eingabeformular eingegeben wird, welches von einer Ausgabeeinheit (114) des Navigationssystems (100) angezeigt wird.

7. Verfahren gemäß Anspruch 5,
bei dem das Ziel gekennzeichnet wird, indem beim Eingeben des Ziels in das Navigationssystem (100) ein bestimmtes Bedienelement des Navigationssystems (100) von einem Benutzer betätigt wird.

8. Verfahren gemäß einem der vorhergehenden Ansprüche,
bei dem die Auswahl des Ziels aus der Mehrzahl von Zielen unter Berücksichtigung einer aktuellen Positions-/Zeitinformation vorgenommen wird, die eine aktuelle Position der Positionsbestimmungseinheit (170), einen bis zu einer aktuellen Position der Positionsbestimmungseinheit (170) zurückgelegten Streckenabschnitt und/oder eine aktuelle Zeit repräsentiert.

9. Verfahren gemäß einem der vorhergehenden Ansprüche,
bei dem ein weiteres Ziel in das Navigationssystem (100) eingegeben wird und das weitere Ziel als ein bevorzugtes Ziel gekennzeichnet wird, wobei das Kennzeichnen bewirkt, dass nur dann eine zu dem weiteren Ziel führende Route mittels des Navigationssystems (100) berechnet wird, wenn das weitere Ziel aus der Mehrzahl von Zielen mittels der Recheneinheit (152) automatisch ausgewählt wurde.

10. Navigationssystem zum Bestimmen einer voraussichtlichen Route, welches aufweist:
eine Positionsbestimmungseinheit (170), die zum Bestimmen einer Mehrzahl von Positionen, die beim Bewegen der Positionsbestimmungseinheit (170) in einem Gebiet von der Positionsbestimmungseinheit (170) erreicht werden, eingerichtet ist,
eine Speichereinheit (142), die zum Speichern der Mehrzahl von Positionen und zum Speichern einer Mehrzahl von Zielen eingerichtet ist,
eine Eingabeeinheit (112), die zum Eingeben eines der Ziele in das Navigationssystem (100) durch einen Benutzer eingerichtet ist, und
eine Recheneinheit (152), die zum automatischen Auswählen des Ziels aus der Mehrzahl von Zielen, wobei das Ziel an keiner Position angeordnet ist, die mittels der Positionsbestimmungseinheit (170) bestimmt wurde und in der Speichereinheit (142) gespeichert ist, und zum Bestimmen der voraussichtlichen Route, welche zu dem Ziel führt, eingerichtet ist.
